# FASCICULE DE BREVET EUROPEEN

(11) **EP 0 434 585 B1**
(45) Date de publication et mention de la délivrance du brevet: **20.09.1995**
(21) Numéro de dépôt: 90460049.1
(22) Date de dépôt: 17.12.1990
(51) Int. Cl.: H04N 7/16

(54) **Dispositif de consultation intelligible de la nature des droits d'accès à un service de télévision et/ou de radio à péage**
Einrichtung zur verständlichen Abfrage der Art von Zugangsrechten für einen Gebühren-Fernseher und/oder -Radio-Dienst
Device for intelligible consultation of the nature of access rights for a pay-television and/or -radio service

(30) Priorité: 22.12.1989 FR 8917287
(43) Date de publication de la demande: 26.06.1991
(73) Titulaire: FRANCE TELECOM, 75015 Paris (FR); TELEDIFFUSION DE FRANCE S.A., 92542 Montrouge Cédex (FR)
(72) Inventeur: Bonicel, Pierre, F-35340 Liffre (FR); Heon, Jean-Pierre, F-35830 Betton (FR); Gautier, Christian, F-35690 Acigne (FR)
(74) Mandataire: Corlau, Vincent

(56) Documents cités:
- EP-A- 0 014 652
- WO-A-81/02961
- WO-A-86/01962
- FUNKSCHAU, vol. 5, 24 février 1989, pages 59-62; C. SCHEPERS: "EUROCRYPT: Der Schlüssel zum Scrambling-Problem?"

## Description

Le domaine de l'invention est celui de la télévision et de la radio à péage.

Plus précisément, l'invention concerne un dispositif d'assistance à un usager titulaire de droits d'accès à des programmes de télévision ou de radio.

On connaît de nombreux systèmes de télévision à péage, dans lesquels les programmes sont transmis de façon embrouillée. L'usager sélectionne les éléments de programme qu'il souhaite regarder, et acquitte les droits correspondants. Ces droits correspondent, par exemple, à l'acquisition d'une clé particulière de désembrouillage des programmes reçus.

Un tel système de télévision à péage procure la facilité d'achat anticipé, c'est à dire l'acquisition de droits qui permettront de visualiser un élément de programme, par exemple sous la forme d'un abonnement mensuel. Il peut également permettre l'achat impulsif, offrant la possibilité à l'usager de n'acquérir les droits pour un élément de programme qu'au moment de sa diffusion.

Les systèmes de contrôle d'accès aux programmes de télévision, et par exemple le système décrit dans les spécifications "Eurocrypt", mettent en oeuvre un processeur de sécurité, notamment sous forme de carte à microprocesseur. Outre un certain nombre de mécanismes liés à la fiabilité du système sous le point de vue de l'inviolabilité, il est défini dans ces processeurs un certain nombre d'éléments, représentant les facilités de commercialisation des produits audiovisuels.

Ainsi, dans les spécifications "Eurocrypt", il est envisagé des possibilités d'accès sélectifs à certains thèmes (sport, théatre...), pour certains groupes d'usagers (médecins, garagistes...), pour certaines périodes, etc...

La gestion d'un service de contrôle d'accès se fait notamment à travers des valeurs d'identificateurs et des pointeurs. Ces éléments se retrouvent, sous la même forme, dans le processeur de sécurité du décodeur de l'usager. La consultation des droits d'accès inscrits dans ce processeur est alors malaisée.

L'usager peut éventuellement visualiser les informations contenues dans le processeur. Cependant, celles-ci ne sont pas directement interprétables, puisque se présentant sous forme numérique. Leur interprétation nécessite des tables de transcodage, consultables par exemple à travers un centre serveur, du type Télétel, en dehors du contexte d'usage du processeur de sécurité, ou dans un centre habilité à cet effet.

D'autre part, les services de télévision à péage existants ne présentent à l'usager aucune indication de gestion sur les possibilités offertes par les prestataires de programmes. Les informations présentées sont insuffisantes pour lui permettre de choisir puis de faire l'acquisition d'un élément de programme, que ce soit de façon anticipée ou de façon impulsive.

Le document de brevet européen EP-A-0 243 312 ("Procédé pour faciliter le dialogue entre un abonné à un système de télévision à péage et un décodeur des signaux reçus et décodeur de ces signaux") concerne un procédé de transmission d'informations sur les programmes de télévision et de leurs modalités d'abonnement sous forme de télétexte. Cependant, les informations transmises sont communes à tous les usagers, et non liées aux informations contenues dans le processeur de sécurité d'un usager particulier. Ainsi, à titre d'exemple, il n'est pas possible de transmettre des informations spécifiques au groupe des usagers médecins, ou à un usager ayant un type d'abonnement de base particulier.

L'invention a notamment pour objectif de pallier ces inconvénients.

Plus précisément, l'invention a pour objectif de fournir un dispositif permettant, au niveau de l'usager, une restitution des informations inscrites dans le processeur de sécurité d'un décodeur de télévision à péage, sous une forme intelligible.

Un objectif complémentaire de l'invention est de fournir un tel dispositif permettant la visualisation d'informations régulièrement mises à jour.

Un autre objectif de l'invention est de fournir un tel dispositif, dans lequel des informations complémentaires, concernant notamment le contenu des programmes de télévision et/ou de radio et les procédures d'acquisition de droits, sont également accessibles à l'usager.

L'invention a également pour objectif de fournir un tel disposif permettant de réaliser de façon conviviale des opérations telles que l'achat de programme ou la consultation de droits inscrits dans le processeur de sécurité.

Ces objectifs, ainsi que d'autres qui apparaîtront par la suite sont atteints à l'aide d'un dispositif de consultation intelligible de la nature des droits d'accès à un service de télévision et/ou de radio à péage inscrits sur un processeur de sécurité d'un usager, sous la forme de données codées, dispositif du type comprenant des moyens d'expression de requêtes par ledit usager, et des moyens de restitution de données sous une forme intelligible, caractérisé en ce qu'il comprend des moyens de réception de données de transcription régulièrement transmises au sein de signaux de télévision et/ou de radio, lesdites données de transcription associant à chacune desdites données codées une information sous une forme intelligible, et des moyens de traitement réalisant la construction de messages destinés à être restitués par lesdits moyens de restitution, et comprenant :
- des moyens d'interprétation d'une desdites requêtes;
- des moyens de consultation sur ledit processeur de sécurité des données codées correspondant à ladite requête;
- des moyens d'association auxdites données codées d'informations intelligibles correspondantes, à partir desdites données de transcription ; et
- des moyens de mise en forme d'un message, à partir de ladite requête et desdites informations intelligibles, ledit message correspondant spécifiquement à une description des droits d'accès inscrits sur ledit processeur de sécurité.

Ainsi, le dispositif selon l'invention peut, à la demande de l'usager, lire les données contenues dans le processeur de sécurité, les transcrire sous forme intelligible à l'aide des données transmises, et enfin les restituer à l'usager. Les informations transmises peuvent par exemple se présenter sous forme de tables de correspondance, associant à chaque information codée susceptible d'être inscrite sur le processeur une information directement interprétable par l'usager.

Les informations complémentaires étant transmises régulièrement, il est aisé de les adapter en fonction du temps et des événements, de les mettre à jour, etc...

Par ailleurs, le fait de ne transmettre que des informations de transcription, et non des pages de texte, permet d'assurer au récepteur une présentation optimisée des informations, par exemple en fonction des informations présentes dans le processeur de sécurité, du type de récepteur ou des désirs de l'usager.

De façon avantageuse, les messages intelligibles comprennent au moins une des informations appartenant au groupe comprenant :
- titres de programmes ;
- informations de thèmes et/ou de niveaux ;
- informations de classes des programmes ;
- informations de séances ;
- informations de zones géographiques ;
- informations de niveau moral ;
- informations de prix ;
- informations de temps ;
- informations de groupes d'usagers.

Dans un mode de réalisation préférentiel de l'invention, les informations complémentaires sont transmises par l'intermédiaire d'une messagerie télétexte.

L'invention présente ainsi une nouvelle utilisation de ces messageries. En effet, ce ne sont plus des pages d'écran figées que l'on transmet, mais des informations de transcription, non destinées à être visualisées directement sur un écran.

Dans ce cas, ladite messagerie télétexte est avantageusement transmise dans les lignes de retour-trames des signaux de télévision, ou dans les paquets de données, dans le cas de signaux vidéo comprenant un multiplex de signaux d'image et/ou de son et/ou de données.

Dans un mode de réalisation particulier de l'invention, les moyens de restitution sont constitués par des moyens d'affichage, comprenant des moyens de génération de caractères, notamment dans une norme télétexte.

Préférentiellement, le processeur de sécurité est placé dans un objet portatif, tel qu'une carte à microprocesseur.

De façon avantageuse, les moyens de traitement utilisent également des informations sur les programmes de télévision et/ou de radio, contenues dans une seconde messagerie télétexte. L'accès aux informations sur les programmes de télévision peut alors être fonction des informations concernant les droits d'accès contenues dans le processeur de sécurité.

Avantageusement, cette seconde messagerie exploite les informations de transcription transmises par la première messagerie, de façon à éviter une transmission d'informations redondante. En d'autres termes, la seconde messagerie utilise des codes identiques à ceux présents dans les processeurs de sécurité, et le récepteur réalise une interprétation similaire à celle effectuée pour la lecture des droits inscrits sur le processeur.

Dans un mode de réalisation préférentiel de l'invention, la seconde messagerie télétexte comprend une page "en-cours", porteuse d'informations sur les programmes en cours de transmission, et transmise à un rythme supérieur à celui des autres pages de la seconde messagerie et un espace "vitrine", contenant des informations accessibles lorsqu'aucun droit d'accès n'est acquis.

L'invention concerne bien sûr également un dispositif d'émission de signaux de télévision et/ou de radio compatibles avec de tels dispositifs de consultation intelligible, comprenant des moyens d'émission régulière d'informations complémentaires destinées à la transcription des informations contenues dans des processeurs de sécurité en messages intelligibles.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 est un schéma présentant le principe général de restitution d'informations intelligibles sur les droits d'accès et les programmes d'un service de télévision à péage selon l'invention ;
- la figure 2 présente un schéma fonctionnel d'un décodeur mettant en oeuvre un dispositif de restitution d'informations transmises selon le principe de la figure 1.

Le mode de réalisation préférentiel décrit concerne un dispositif implanté dans un décodeur de signaux de télévision à péage mettant en oeuvre les spécifications "Eurocrypt". Toutefois, l'invention peut s'appliquer également à tous les systèmes de télévision et/ou de radio à péage, quels qu'en soit les principes de contrôle d'accès, d'embrouillage et le support de transmission.

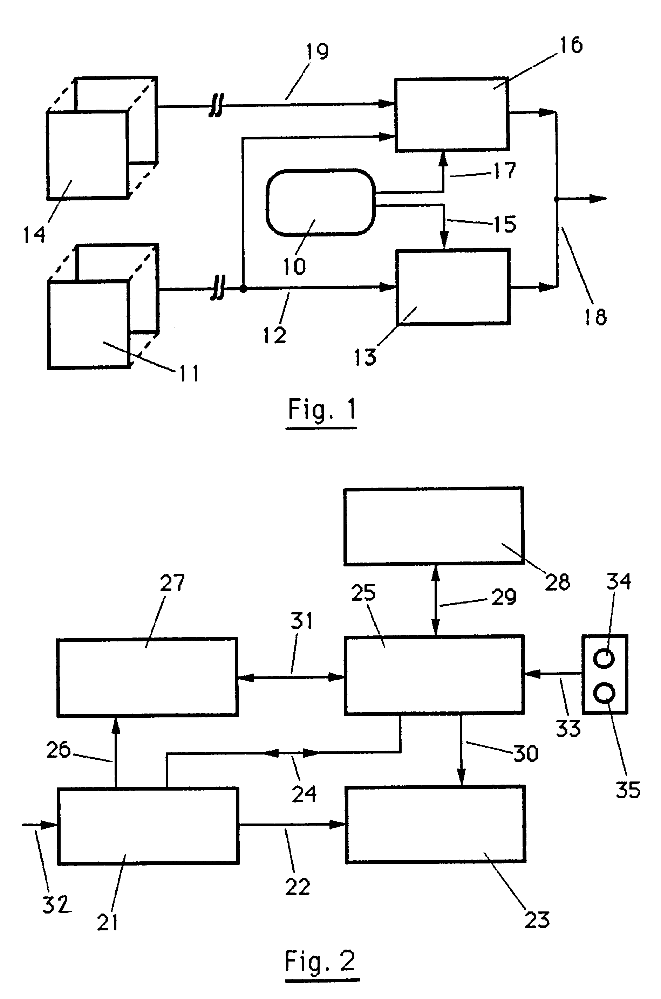

La figure 1 présente le principe général de l'invention.

Le contrôle d'accès à des éléments de programme particuliers se fait, de façon générale, par l'intermédiaire d'un processeur de sécurité 10 dans lequel sont inscrits les différents droits d'accès acquis par un usager. Ces informations sont présentées de façon a assurer une inviolabilité maximale du système.

Dans le cas des spécifications "Eurocrypt", ce processeur de sécurité 10 est placé dans une carte à microprocesseur, permettant notamment de faciliter la réactualisation de certains droits d'accès dans des centres spécifiques de gestion de droits.

Le processeur de sécurité 10 contient différentes informations, sous forme numérique binaire. Ces informations sont précisées dans les spécifications de normes "Eurocrypt". A titre d'exemple, un usager particulier peut acquérir des droits spécifiques sur les éléments de programmes présentant les rencontres de foot-ball, les émissions concernant uniquement les médecins jusqu'à une certaine date, et les pièces de théatre diffusées après 20 h 30.

La spécificité de tels droits nécessite d'avoir un moyen de consultation en clair de ces droits, ne serait-ce que pour vérifier que l'on a bien acquis les droits souhaités.

Pour cela, on transmet, par l'intermédiaire d'une messagerie 11 de télétexte, les informations 12 permettant de faire un transcodage des informations numériques contenues dans le processeur 10.

Cette messagerie 11, appellée messagerie d'identification de données comprend notamment les éléments suivants :
- un répertoire des thèmes et des niveaux, utilisé pour faire le lien entre les identificateurs de thèmes-niveaux utilisés dans les titres d'accès avec les descripteurs de ces thèmes et niveaux,
- un répertoire des classes,
- un répertoire des séances,
- un répertoire des occultations,
- un répertoire des identificateurs de niveau moral,
- un répertoire des groupes d'usager,
- la date et l'heure actuelle,
- le prix d'une unité de tarification.

Un module 13 de traitement des données réalise le lien entre les données 12 transmises et les données 15 contenues dans le processeur 10, et fournit des informations 18 sous forme intelligible.

A titre d'exemple, les données 12 sont constituées d'une table doit chaque enregistrement comprend 2 champs :
- un champ "indice", ou "identifiant", correspondant chacun à une des informations codées ou susceptibles d'être codées dans le processeur de sécurité 10 ;
- un champ "libellé", fournissant l'information intelligible correspondant à l'identifiant du premier champ du même enregistrement.

Chacun des enregistrements est envoyés par exemple sous forme d'un journal cyclique déroulant.

De façon optionnelle, il est également possible de transmettre des données 19 d'une seconde messagerie télétexte 14, contenant des informations spécifiques aux éléments de programmes de télévision et aux conditions d'accès à ces éléments de programmes.

Ces données 19 peuvent notamment contenir les informations suivantes, pour un programme :
- identification du programme ;
- date de diffusion de l'élément de programme ;
- heure de début probable d'une émission ;
- heure de départ réelle ;
- durée diffusion ;
- identificateur de thème et niveau du programme ;
- identificateur de classe ;
- identificateur de séance ;
- identificateur de zone occultée et spécification du mode autorisation/interdiction ;
- identificateur de niveau moral ;
- un indicateur de possibilité d'achat selon les modes séances, abonnement (ces modes n'étant pas exclusifs) ;
- le coût de la séance pour un achat anticipé ;
- le coût de la séance pour un achat impulsif ;
- le coût de l'unité de temps du programme.

En plus des éléments ci-dessus, un espace représentant une "vitrine" de l'opérateur peut-être fournie avec cette messagerie. Son rôle est de constituer un lien entre l'opérateur et l'usager pour des opérations qui ne sont pas accessibles directement par la messagerie par exemple sous forme publicitaire.

De façon avantageuse, une page "en-cours" est transmise à un rythme supérieur aux autres informations. Ainsi, l'accès aux informations spécifiques aux émissions en cours de diffusion permettant l'achat impulsif est facilité.

Un module 16 de traitement permet la mise en forme de ces informations 19.

De façon avantageuse, ces informations 19 peuvent utiliser des éléments contenus dans la première messagerie 11. Ainsi, de façon à réduire le nombre de caractères à transmettre, il est possible de ne transmettre que des indicateurs, dont la signification en clair est transmises par les informations 12 de transcodage.

Le procédé peut également être inversé. Dans ce cas, les répertoires de la messagerie 11 ne contiennent que des indices, pointant sur des informations littérales de la messagerie 14.

Les deux messageries 11 et 14 peuvent être multiplexées dans le temps.

Pour permettre l'accès du service au plus grand nombre possible de récepteurs, et afin de simplifier la mise en oeuvre, il est fait appel à un codage de type télétexte.

La transmission de ces messageries se fait lors des retours-trame des signaux de télévision, ainsi que cela est fait pour les télétextes connus de type ANTIOPE ou CEEFAX. Dans le cas de signaux de type X-MAC, ces messageries peuvent également être transmises dans les paquets de données de ces signaux.

L'utilisation de messageries de type télétexte n'est pas limitative de l'invention. En effet, les informations de l'invention ne sont pas de pages directement visualisables, mais des informations numériques pouvant être transmises sous d'autres formes.

Cependant, l'utilisation de messagerie télétexte permet d'utiliser des moyens de transmission et de visualisation déjà existants.

La figure 2 est un schéma fonctionnel d'un dispositif permettant la visualisation des informations du service audiovisuel concerné.

Un récepteur 21 reçoit le signal transmis 32, et réalise l'acquisition des éléments du service audiovisuel concerné. Son rôle est de prendre en compte le codage de transmission. Les éléments 22 concernant le service audiovisuel proprement dit sont dirigés directement vers l'organe de restitution 23, les éléments 24 de signalisation inclus dans le service vers un processeur 25 de gestion du récepteur, et les éléments 26 de la messagerie d'assistance vers un organe de décodage des informations de la messagerie d'assistance 27.

L'organe de réception 21 extrait les informations 24 de signalisation décrivant le service reçu du signal incident 32 et les transmet à l'organe 25 de gestion du récepteur. Avec ces données 24 l'organe 25 de gestion est capable de proposer à l'usager de choisir les éléments du service audiovisuel auxquels il désire accéder.

Dans un contexte de service audiovisuel à accès non conditionnel, l'usager peut à partir de ces éléments jouir du service proposé à travers l'organe de restitution 23.

Dans le cas de service à accès conditionnel, l'usager ne pourra accéder au service proprement dit que si le récepteur peut vérifier que les conditions requises sont remplies. Cette vérification est effectuée par le module de contrôle d'accès 28. Pour fonctionner correctement cet organe 28 reçoit des informations 29 depuis l'organe 25 de gestion du récepteur, qui lui-même les extrait du récepteur 21. Le rôle de l'organe 25 de gestion est ici non seulement de sélectionner les éléments nécessaires mais aussi de contrôler si les informations 24 fournies sont celles attendues par le module de contrôle d'accès 28.

L'interface avec l'usager se fait à travers l'organe de restitution 23. Par cette voie l'organe 25 de gestion peut transmettre des informations 30 qui permettent à l'usager de faire ses choix par rapport aux possibilités offertes par le service.

Dans le cas d'un service à accès contrôlé, c'est par cette voie que le récepteur peut fournir soit les éléments de sélection pour l'acquisition de nouveaux droits, soit les informations contenues dans le module de contrôle d'accès 28 et qui lui permettent de le gérer à sa guise. L'adjonction d'une messagerie d'assistance permet de rendre ces dernières facilités plus conviviales en rendant explicites les éléments du contrôle d'accès.

Les éléments de l'assistance sont fournis dans un service particulier dont l'organe 27 assure la sélection et le décodage selon les ordres 31 reçus du module de gestion 25. A partir de ces informations, ce dernier opère la mise en forme des messages d'assistance avant de les présenter à l'usager sur l'organe de restitution 23.

Les moyens de restitution de l'information sous une forme intelligible sont ici des moyens de visualisation sur l'écran de télévision par l'intermédiaire d'un générateur de caractères, qui peut être avantageusement commun avec un récepteur de journaux télétexte.

Ces moyens de restitution peuvent être également des moyens de synthèse vocale, ou tout autre moyen de restitution.

L'expression de requêtes 33 par l'usager peut notamment se faire simplement, en appuyant sur deux boutons 34,35 en face avant du terminal l'un 34 repéré par "affichage" et l'autre 35 par "consultation". Cette activation peut également se faire par une télécommande à infra-rouge disposant de ces boutons 34,35.

Une autre possibilité, permettant une interaction plus importante, est l'utilisation d'un clavier plus complet.

## Revendications

1. Dispositif de consultation intelligible de la nature des droits d'accès à un service de télévision et/ou de radio à péage inscrits sur un processeur de sécurité d'un usager, sous la forme de données codées,
dispositif du type comprenant des moyens (34,35) d'expression de requêtes (33) par ledit usager, et des moyens (23) de restitution de données sous une forme intelligible, caractérisé en ce qu'il comprend des moyens de réception (21, 27) de données de transcription régulièrement transmises au sein de signaux de télévision et/ou de radio, lesdites données de transcription associant à chacune desdites données codées une information sous une forme intelligible,
et des moyens de traitement (13,16 ; 25,27,28) réalisant la construction de messages (30) destinés à être restitués par lesdits moyens (23) de restitution, et comprenant :
- des moyens (25) d'interprétation d'une desdites requêtes (33) ;
- des moyens (28) de consultation sur ledit processeur de sécurité des données codées correspondant à ladite requête (33) ;
- des moyens (27) d'association auxdites données codées d'informations intelligibles correspondantes (31), à partir desdites données de transcription ; et
- des moyens (25) de mise en forme d'un message (30), à partir de ladite requête et desdites informations intelligibles, ledit message (30) correspondant spécifiquement à une description des droits d'accès inscrits sur ledit processeur de sécurité.

2. Dispositif selon la revendication 1, caractérisé en ce que lesdites informations intelligibles comprennent au moins une des informations appartenant au groupe comprenant :
- titres de programmes ;
- informations de thèmes et/ou de niveaux ;
- informations de classes des programmes ;
- informations de séances ;
- informations de zones géographiques ;
- informations de niveau moral ;
- informations de prix ;
- informations de temps ;
- informations de groupes d'usagers.

3. Dispositif selon l'une quelconque des revendications 1 ou 2, caractérisé en ce que lesdites données de transcription (12) complémentaires sont transmises par l'intermédiaire d'une messagerie télétexte (11).

4. Dispositif selon la revendication 3, du type appliqué à la consultation de droits d'accès à des signaux de télévision transmis sous la forme d'un multiplex de signaux d'image et/ou de son et/ou de données, caractérisé en ce que lesdites données de transcription (12) de ladite messagerie télétexte (11) sont transmises dans les lignes de retour-trames desdits signaux de télévision, et/ou dans les paquets de données.

5. Dispositif selon l'une quelconque des revendications 1 à 4, caractérisé en ce que lesdits moyens (23) de restitution comprennent des moyens d'affichage, comprenant des moyens de génération de caractères, notamment dans une norme télétexte.

6. Dispositif selon l'une quelconque des revendications 3 à 5, caractérisé en ce que lesdits moyens (13,16 ; 25,27) de traitement utilisent également des informations complémentaires (19) sur les programmes de télévision et/ou de radio, contenues dans une seconde messagerie télétexte (14).

7. Dispositif selon la revendication 6, caractérisé en ce que l'accès auxdites informations complémentaires (19) sur les programmes est fonction desdits droits d'accès (15, 17) contenues dans ledit processeur (10 ; 28) de sécurité.

8. Dispositif selon l'une quelconque des revendications 6 et 7, caractérisé en ce que les informations complémentaire (19) contenues dans ladite seconde messagerie télétexte (14) comprennent des données codées dans le même format que les données contenues dans ledit processeur (10,28), et en ce que lesdits moyens (15,16 ; 25,27) effectuent la transcription desdites données codées, à l'aide des informations (12) transmise par ladite messagerie télétexte (11).

9. Dispositif selon l'une quelconque des revendications 6 à 8, caractérisé en ce que ladite seconde messagerie télétexte (14) comprend au moins une des pages appartenant au groupe comprenant :
- pages "en-cours", porteuse d'informations sur les programmes en cours de transmission, et transmise à un rythme supérieur à celui des autres pages de ladite seconde messagerie ;
- pages "vitrine", contenant des informations accessibles lorsqu'aucun droit d'accès n'est acquis.

## Patentansprüche

1. Einrichtung zur verständlichen Abfrage der Art von Zugangsrechten für einen gebührenpflichtigen Fernseh- und/oder Rundfunkdienst, die beim Anwender in einem Sicherungsprozessor in der Form kodierter Daten gespeichert sind, wobei die Einrichtung umfaßt: Mittel (34, 35) zum Ausdrücken von Anforderungen (33) seitens des Anwenders sowie Mittel (23) zur Wiedergabe von Daten in verständlicher Form,
gekennzeichnet durch Mittel zum Empfang (21, 27) von Umwandlungsdaten, die regelmäßig innerhalb der Fernseh- und/oder Rundfunksignale gesendet werden, wobei die Umwandlungsdaten den einzelnen kodierten Daten eine Information in verständlicher Form zuordnen, und Bearbeitungsmittel (13, 16; 25, 27, 28) zum Erstellen von Meldungen (30), welche durch die Wiedergabemittel (23) wiedergegeben werden und folgendes enthalten:
- Mittel (25) zur Interpretation der Anforderungen (33);
- Mittel (28) zur Abfrage der kodierten Daten aus dem Sicherungsprozessor, die der Abfrage (33) entsprechen;
- Mittel (27) um den kodierten Daten entsprechende verständliche Informationen (31) zuzuordnen, ausgehend von den Umwandlungsdaten; und
- Mittel (25) zur Formatierung einer Meldung (30), ausgehend von der Abfrage und von den verständlichen Informationen, wobei die Meldung (30) spezifisch einer Beschreibung der Zugangsrechte entspricht, die in dem Sicherungsprozessor gespeichert sind.

2. Einrichtung gemäß Anspruch 1,
dadurch gekennzeichnet, daß die verständlichen Informationen mindestens eine Information aus der folgenden Gruppe umfassen:
- Programmüberschriften;
- Information bezüglich der Themen und/oder Niveaus;
- Information bezüglich der Programmklassen;
- Information bezüglich der Veranstaltungen;
- Information bezüglich der geographischen Zonen;
- Information bezüglich des sittlichen Niveaus;
- Information bezüglich der Preise;
- Zeitinfomation;
- Information bezüglich der Anwendergruppen.

3. Einrichtung gemäß einem der Ansprüche 1 oder 2, dadurch gekennzeichnet, daß die ergänzenden Umwandlungsdaten (12) über ein Bildschirmtext-Mailsystem (11) übertragen werden.

4. Einrichtung gemäß Anspruch 3, von der Art, die auf die Abfrage der Zugangsrechte zu Fernsehsignalen angewandt wird, welche in der Form eines Multiplexes von Bild- und/oder Klang- und/oder Datensignalen gesendet werden,
dadurch gekennzeichnet, daß die Umwandlungsdaten (12) des Bildschirmtext-Mailsystems (11) über die Rahmenumkehrleitungen der Fernsehsignale und/oder in den Datenpaketen gesendet werden.

5. Einrichtung gemäß einem der Ansprüche 1 bis 4,
dadurch gekennzeichnet, daß die Wiedergabemittel (23) über Anzeigemittel verfügen, welche Mittel zur Erzeugung von Zeichen umfassen, insbesondere im Rahmen einer Bildschirmtextnorm.

6. Einrichtung gemäß einem der Ansprüche 3 bis 5,
dadurch gekennzeichnet, daß die Bearbeitungsmittel (13, 16; 25, 17) ebenfalls ergänzende Informationen (19) bezüglich der Fernseh- und/oder Rundfunkprogramme anwenden, die in einem zweiten Bildschirmtext-Mailsystem (14) enthalten sind.

7. Einrichtung gemäß Anspruch 6,
dadurch gekennzeichnet, daß der Zugang zu den Zusatzinformationen (19) bezüglich der Programme von den Zugangsrechten (15, 17) abhängt, die im Sicherungsprozessor (10; 28) gespeichert sind.

8. Einrichtung gemäß einem der Ansprüche 6 oder 7,
dadurch gekennzeichnet, daß die in dem zweiten Bildschirmtext-Mailsystem (14) enthaltenen ergänzenden Informationen (19) Daten umfassen, die nach dem gleichen Format wie die im Prozessor (10, 28) enthaltenen Daten kodiert sind, und daß die Mittel (15, 16; 25, 27) die Umwandlung der kodierten Daten mittels der Informationen (12) bewirken, die vom Bildschirmtext-Mailsystem (11) übertragen werden.

9. Einrichtung gemäß einem der Ansprüche 6 bis 8,
dadurch gekennzeichnet, daß das zweite Bildschirmtext-Mailsystem (14) mindestens eine der Seiten aus der Gruppe umfaßt, die folgendes enthält:
- "umlaufende" Seiten, die Information bezüglich der auf Sendung befindlichen Programme tragen und mit einer höheren Rate als die anderen Seiten des zweiten Mailsystems gesendet werden;
- "Schaufenster"-Seiten, die Informationen enthalten, die dann zugänglich sind, wenn kein Zugangsrecht gefordert wird.

## Claims

1. Device for intelligible consultation of the nature of the access rights to a pay television and/or radio service, which rights are registered in a security processor of a user, in the form of coded data,
a device of the type comprising means (34, 35) for formulating requests (33) by the said user, and means (23) for restoring data in an intelligible form, characterized in that it comprises means (21, 27) for receiving transcription data transmitted regularly within television and/or radio signals, the said transcription data associating an information item in an intelligible form with each of the said coded data,
and processing means (13, 16; 25, 27, 28) effecting the construction of messages (30) which are intended to be restored by the said restoring means (23), and comprising:
- means (25) for interpreting one of the said requests (33);
- means (28) for consulting, in the said security processor, the coded data corresponding to the said request (33);
- means (27) for associating corresponding intelligible information (31) with the said coded data, on the basis of the said transcription data; and
- means (25) for formatting a message (30), on the basis of the said request and of the said intelligible information, the said message (30) corresponding specifically to a description of the access rights registered in the said security processor.

2. Device according to Claim 1, characterized in that the said intelligible information comprises at least one item from the information belonging to the group comprising:
- programme titles;
- information on topics and/or on ratings;
- information on classes of programmes;
- information on shows;
- information on geographical areas;
- information of a moral kind;
- information on prices;
- information on times;
- information on user groups.

3. Device according to either of Claims 1 or 2, characterized in that the said complementary transcription data (12) are transmitted by way of teletext messaging (11).

4. Device according to Claim 3, of the type applied to the consultation of access rights to television signals transmitted in the form of a multiplex of picture and/or sound and/or data signals,
characterized in that the said transcription data (12) of the said teletext messaging (11) are transmitted in the frame-flyback lines of the said television signals, and/or in the data packets.

5. Device according to any one of Claims 1 to 4, characterized in that the said restoring means (23) comprise display means, comprising means of generating characters, in particular under a teletext standard.

6. Device according to any one of Claims 3 to 5, characterized in that the said processing means (13, 16; 25, 27) also use complementary information (19) about the television and/or radio programmes, contained in a second teletext messaging (14).

7. Device according to Claim 6, characterized in that access to the said complementary information (19) about the programmes is dependent upon the said access rights (15, 17) contained in the said security processor (10; 28).

8. Device according to either of Claims 6 and 7, characterized in that the complementary information (19) contained in the said second teletext messaging (14) comprises -data coded in the same format as the data contained in the said processor (10, 28), and in that the said means (15, 16; 25, 27) perform the transcription of the said coded data, with the aid of the information (12) transmitted by the said teletext messaging (11).

9. Device according to any one of Claims 6 to 8, characterized in that the said second teletext messaging (14) comprises at least one of the pages belonging to the group comprising:
- "current" pages, carrying information about the programmes currently under transmission, and transmitted at a rate greater than that of the other pages of the said second messaging;
- "window" pages, containing information which is accessible when no access right is granted.
